# EUROPÄISCHE PATENTSCHRIFT

(11) **EP 2 697 536 B1**
(45) Veröffentlichungstag und Bekanntmachung des Hinweises auf die Patenterteilung: **30.12.2015**
(21) Anmeldenummer: 12709562.8
(22) Anmeldetag: 12.03.2012
(51) Int. Cl.: F16H 3/02, F16H 45/02, F16H 57/00, F16F 15/131, F16H 3/66

(54) **GETRIEBE, INSBESONDERE FÜR DEN ANTRIEBSSTRANG EINES FAHRZEUGS**
GEARBOX, IN PARTICULAR FOR THE DRIVE TRAIN OF A VEHICLE
BOÎTE DE VITESSES, EN PARTICULIER POUR LA CHAÎNE CINÉMATIQUE D'UN VÉHICULE

(30) Priorität: 11.04.2011 DE 102011007117
(43) Veröffentlichungstag der Anmeldung: 19.02.2014
(73) Patentinhaber: ZF Friedrichshafen AG, 88038 Friedrichshafen (DE)
(72) Erfinder: LORENZ, Daniel, 97688 Bad Kissingen (DE); CARLSON, Cora, 97456 Dittelbrunn (DE); WEIGAND, Thomas, 97421 Schweinfurt (DE); DÖGEL, Thomas, 97720 Nüdlingen (DE); KÜHNER, Michael, 74078 Heilbronn (DE); ORLAMÜNDER, Andreas, 97453 Schonungen (DE)
(86) Internationale Anmeldenummer: PCT/EP2012/054192
(87) Internationale Veröffentlichungsnummer: WO 2012/139828

(56) Entgegenhaltungen:
- EP-A2- 2 108 859
- DE-A1- 3 630 398
- DE-A1- 10 024 281
- DE-A1- 19 700 851

## Beschreibung

Die vorliegende Erfindung betrifft ein Getriebe, das beispielsweise im Antriebsstrang eines Fahrzeugs zur Drehmomentübertragung zwischen einem Antriebsaggregat, wie z. B. Brennkraftmaschine, und den angetriebenen Rädern genutzt wird, um das Übersetzungsverhältnis an verschiedene Fahrzustände anzupassen. Beispielsweise kann ein derartiges Getriebe als Automatikgetriebe oder als automatisiertes Schaltgetriebe, also grundsätzlich automatisch bzw. selbstschaltend ausgebildet sein.

Die DE 197 00 851 A1 bezieht sich auf einen Torsionsschwindungsdämpfer, bei dem beispielsweise eine Federeinrichtung beschrieben ist, die durch einen Planetenträger ansteuerbar ist. Der Planetenträger ist hier als Zwischenmasse des Torsionsschwingungsdämpfers wirksam. Die DE 100 24 281 A1 bezieht sich auf ein drehschwingungsgedämpftes Getriebe, insbesondere auf ein solches mit einem Lepelletier-Radsatz. Die EP 2 108 859 A2 beschreibt ein Verfahren und ein System zur Schwingungsreduzierung im Antriebsstrang eines ein Getriebe umfassenden Fahrzeugs, während sich die DE 36 30 398 A1 eine drehstoßmindernde Einrichtung beschreibt.

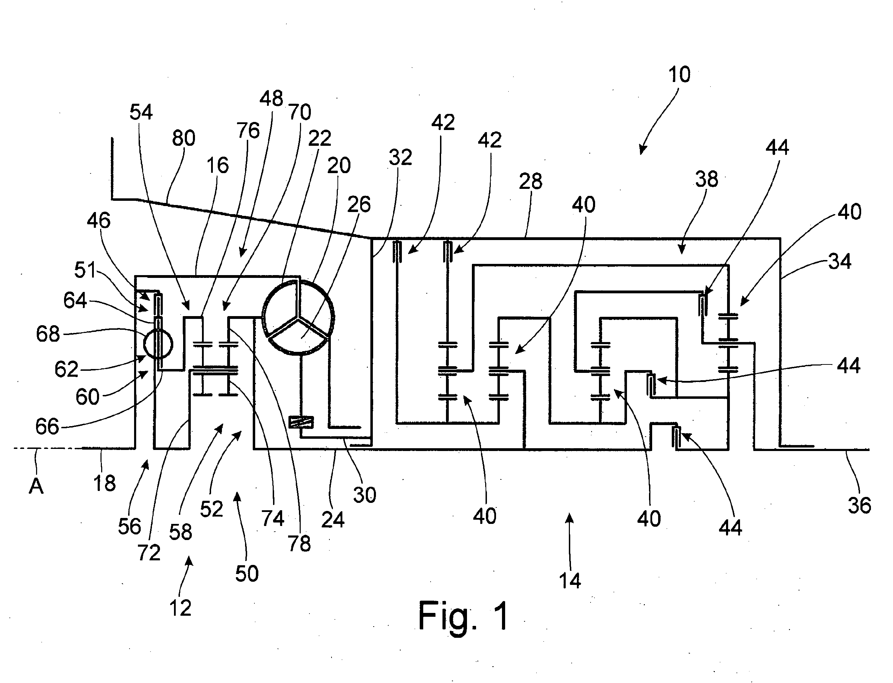

In Fig. 1 ist ein Teil eines allgemein mit 10 bezeichneten Antriebsstrangs eines Fahrzeugs dargestellt. Dieser dargestellte Teil umfasst einen hydrodynamischen Drehmomentwandler 12 und ein im Drehmomentenfluss darauf folgendes Automatikgetriebe 14.

Ein Gehäuse 16 des Drehmomentwandlers 12 ist zur Ankopplung an eine Antriebswelle 18, also beispielsweise Kurbelwelle einer Brennkraftmaschine, ausgebildet und trägt ein Pumpenrad 20. Im Inneren des Gehäuses 16 ist ein Turbinenrad 22 angeordnet, das über eine nicht dargestellte Turbinenradnabe oder allgemein Abtriebsnabe mit einer allgemein mit 24 bezeichneten Getriebeeingangswelle beispielsweise durch Verzahnungseingriff zur gemeinsamen Drehung um eine Drehachse A gekoppelt ist. Ferner ist im Inneren des Gehäuses 16 ein allgemein mit 26 bezeichnetes Leitrad angeordnet, das auf einer an einem Getriebegehäuse 28 getragenen Stützhohlwelle 30 in einer Richtung um die Drehachse A drehbar getragen ist.

Die Getriebeeingangswelle 24 ist am Getriebegehäuse 28, beispielsweise einer Gehäusewandung 32 desselben, drehbar getragen. An einer von der Gehäusewandung 32 axial entfernt liegenden weiteren Gehäusewandung 34 ist eine Getriebeausgangswelle 36 drehbar getragen. Im Drehmomentenfluss zwischen der Getriebeeingangswelle 24 und der Getriebeausgangswelle 36 liegt ein allgemein mit 38 bezeichnetes Übersetzungsänderungssystem. Dieses umfasst bei dem dargestellten Beispiel eines Automatikgetriebes eine Mehrzahl von Planetengetriebestufen 40, Bremsen 42 und Kupplungen 44. Durch Ansteuerung bzw. Aktivierung/Deaktivierung der Bremsen 42 und Kupplungen 44 kann der Drehmomentenfluss über die verschiedenen Planetengetriebestufen 40 und dementsprechend das Übersetzungsverhältnis zwischen der Getriebeeingangswelle 24 und der Getriebeausgangswelle 36 variiert werden.

Im Drehmomentwandler 12 ist im Drehmomentenfluss zwischen einer Überbrückungskupplung 46 und der Abtriebsnabe bzw. der Getriebeeingangswelle 24 eine allgemein mit 48 bezeichnete Drehschwingungsdämpfungsanordnung angeordnet. Diese Drehschwingungsdämpfungsanordnung 48 weist einen beispielsweise durch den Abtriebsbereich der Überbrückungskupplung 46 mit bereitgestellten Eingangsbereich 50 und einen auch mit dem Turbinenrad 22 gekoppelten und beispielsweise auch die Abtriebsnabe bereitstellenden Ausgangsbereich 52 auf. Zwischen dem Eingangsbereich 50 und dem Ausgangsbereich 52 sind zwei parallele Drehmomentübertragungswege 54, 56 ausgebildet, die im Eingangsbereich 56 aufzweigen und im Bereich einer allgemein mit 58 bezeichneten Kopplungsanordnung wieder zusammengeführt sind. Dies hat zur Folge, dass die über die beiden Drehmomentübertragungswege 54, 56 geleiteten Drehmomentenanteile des am Eingangsbereich 50 aufgenommenen zu übertragenden Drehmoments in der Kopplungsanordnung 58 zusammengeführt und am Ausgangsbereich 52 aufgenommen werden. Ein erster Drehmomentübertragungsweg 54 der beiden Drehmomentübertragungswege 54, 56 umfasst eine Phasenschieberanordnung 60. Die Phasenschieberanordnung 60 ist mit einem Schwingungssystem 62 ausgebildet, das eine beispielsweise mit zwei Deckscheibenelementen ausgebildete Primärseite 64, eine mit einem Zentralscheibenelement ausgebildete Sekundärseite 66 und eine Federanordnung 68 umfasst. Gegen die Rückstellwirkung der Federanordnung, beispielsweise einer Mehrzahl von in Umfangsrichtung verteilt liegenden Schraubendruckfedern, die sich an der Primärseite 64 und der Sekundärseite abstützen können, können die Primärseite 64 und die Sekundärseite 66 sich bezüglich einander um die Drehachse drehen.

Enthält das zu übertragende Drehmoment Drehungleichförmigkeiten bzw. Drehschwingungen, so führt dies zu einer Schwingungsanregung des Schwingungssystems 62 der Phasenschieberanordnung 60. Solange diese Schwingungsanregung mit einer Frequenz erfolgt, welche unter der Resonanzfrequenz des Schwingungssystems 62 liegt, arbeitet das Schwingungssystem 62 unterkritisch, was bedeutet, dass die Schwingungsanregung und die Reaktion des Schwingungssystems 62 gleichphasig sind. Übersteigt die Anregungsfrequenz bzw. die Schwingungsfrequenz die Resonanzfrequenz des Schwingungssystems 62, geht dieses in einen überkritischen Zustand über, in welchem eine Phasenverschiebung zwischen Anregung und Reaktion erzeugt wird, welche im Idealfalle bei maximal 180°liegen kann, so dass die Reaktion, also die Schwingung der Sekundärseite 66 im Wesentlichen gegenphasig zur Anregung, also zur Schwingung der Primärseite 64 ist.

Aufgrund der Aufteilung des zu übertragenden Drehmoments auf die beiden Drehmomentübertragungswege 54, 56 werden Schwingungen bzw. Drehungleichförmigkeiten enthaltende Drehmomentenanteile über diese beiden Drehmomentübertragungswege 54, 56 geleitet. Da im dargestellten Beispiel der zweite Drehmomentübertragungsweg 56 keine Phasenschieberanordnung enthält, sondern beispielsweise vergleichsweise steif ausgebildet ist, also im Bereich der auftretenden Anregungsfrequenzen nicht zur Resonanzschwingung angeregt werden kann, weisen die über die beiden Drehmomentübertagungswege 54, 56 geleiteten Drehmomentenanteile hinsichtlich der darin enthaltenen Schwingungen eine Phasenverschiebung zueinander auf, die, wie bereits ausgeführt, im Idealfalle maximal 180° betragen kann. Bei Zusammenleitung dieser beiden Drehmomentenanteile in der Kopplungsanordnung 58 werden diese phasenverschobenen Schwingungsanteile einander überlagert, so dass im Idealfall diese Schwingungsanteile aufgrund der gegenseitigen Phasenverschiebung einander nahezu vollständig auslöschen. Das in den Ausgangsbereich 52 weitergeleitete Drehmoment enthält dann im Wesentlichen keine Schwingungsanteile mehr bzw. deutlich geringere Schwingungsanteile und wird in dieser Weise in den weiteren Antriebsstrang, hier die Getriebeeingangswelle 24 bzw. das Getriebe 14, weitergeleitet.

Die Kopplungsanordnung 58 umfasst eine Planetengetriebeanordnung 70 mit einem im zweiten Drehmomentübertragungsweg 56 vorgesehenen Planetenradträger 72. Dieser trägt eine Mehrzahl von in Umfangsrichtung verteilt liegenden Planetenrädern 74. Jedes Planetenrad 74 wirkt mit einem im ersten Drehmomentübertragungsweg 54 an der Sekundärseite 66 des Schwingungssystems 62 vorgesehenen antriebsseitigen Hohlrad 76 und einem am Ausgangsbereich 52 vorgesehenen und beispielsweise auch mit dem Turbinenrad 22 drehfest gekoppelten abtriebsseitigen Hohlrad 78 zusammen. Hierzu können die Planetenräder 74 mit zwei Verzahnungsbereichen ausgebildet sein. Durch die Ausgestaltung der Planetenräder 74 bzw. der Hohlräder 76, 78 kann dabei das in der Kopplungsanordnung 58 erreichbare Übersetzungsverhältnis eingestellt werden. Sind die beiden Hohlräder 76, 78 hinsichtlich ihrer Verzahnung und ihres Durchmessers zueinander im Wesentlichen identisch, so dass die beiden den Hohlrädern 76, 78 zugeordneten Verzahnungsbereichen der Planetenräder 74 beispielsweise durch eine durchlaufende Verzahnung bereitgestellt sein können, liegt ein Übersetzungsverhältnis von 1 vor. Ein Übersetzungsverhältnis von 1 bedeutet jedoch, dass das gesamte Drehmoment über den ersten Drehmomentübertragungsweg 54 geleitet wird und mithin keine zu einer auslöschenden Schwingungsüberlagerung nutzbare Phasenverschiebung generiert wird. Weist das Übersetzungsverhältnis einen von 1 verschiedenen Wert auf, so wird je nachdem, ob dieser Wert größer oder kleiner als 1 ist, der über die beiden Drehmomentübertragungswege 54, 56 geleitete Drehmomentenanteil eingestellt und dadurch die vorangehend angesprochene Überlagerung von Schwingungsanteilen mit zumindest teilweiser Auslöschung erreichbar. Ein derartiges von 1 sich unterscheidendes Übersetzungsverhältnis kann beispielsweise dadurch erreicht werden, dass bei gleich gestalteten Verzahnungsbereichen der Planetenräder 74 die Hohlräder 76 und 78 zueinander unterschiedliche Profilverschiebungen aufweisen. Auch können die an den Planetenrädern 74 in Zuordnung zu den beiden Hohlrädern 76, 78 vorgesehenen Verzahnungsbereiche zueinander unterschiedlichen Durchmesser aufweisen, was selbstverständlich einen entsprechend unterschiedlichen Durchmesser der Hohlräder 76, 78 bezüglich einander erzwingt und die Erzeugung eines von 1 sich unterscheidenden Übersetzungsverhältnisses zur Folge hat.

Es ist die Aufgabe der vorliegenden Erfindung, ein Getriebe bereitzustellen, welches auch die Funktionalität einer Dämpfung bzw. Minderung der in einem Antriebsstrang auftretenden Drehungleichförmigkeiten bzw. Schwingungsanregungen aufweist.

Erfindungsgemäß wird diese Aufgabe gelöst durch ein Getriebe, insbesondere für den Antriebsstrang eines Fahrzeugs, umfassend wenigstens ein Getriebeeingangsorgan, wenigstens ein Getriebeausgangsorgan und im Drehmomentübertragungsweg zwischen dem wenigstens einen Getriebeeingangsorgan und dem wenigstens einen Getriebeausgangsorgan ein Übersetzungsänderungssystem, ferner umfassend im Drehmomentübertragungsweg zwischen wenigstens einem Getriebeeingangsorgan und wenigstens einem Getriebeausgangsorgan eine Drehschwingungsdämpfungsanordnung mit einem Eingangsbereich und einem Ausgangsbereich, wobei zwischen dem Eingangsbereich und dem Ausgangsbereich ein erster Drehmomentübertragungsweg und parallel dazu ein zweiter Drehmomentübertragungsweg sowie eine Kopplungsanordnung zur Überlagerung der über die Drehmomentübertragungswege geleiteten Drehmomente vorgesehen sind, wobei die Drehschwingungsdämpfungsanordnung wenigstens im ersten Drehmomentübertragungsweg eine Phasenschieberanordnung umfasst zur Erzeugung einer Phasenverschiebung von über den ersten Drehmomentübertragungsweg geleiteten Drehungleichförmigkeiten bezüglich über den zweiten Drehmomentübertragungsweg geleiteten Drehungleichförmigkeiten.

Bei der vorliegenden Erfindung ist also die durch Drehmomentenaufteilung und Überlagerung eingeführte Schwingunsgdämpfungscharakteristik in das Getriebe selbst integriert. Dies bringt substantielle Vorteile mit sich. Zum einen wird damit außerhalb des Getriebes, also beispielsweise im Bereich der in Fig. 1 auch erkennbaren Getriebeglocke 80, Bauraum für andere Systemkomponenten geschaffen bzw. grundsätzlich weniger Bauraum beansprucht. Zum anderen sind Getriebe im Allgemeinen mit einem im Getriebegehäuse gebildeten, abgeschlossenen Volumenbereich aufgebaut, in welchem das Übersetzungsänderungssystem enthalten und mit einem Fluid, im Allgemeinen Öl, geschmiert ist. Dieses Schmierfluid kann bei Integration zumindest eines Teils einer Drehschwingungsdämpfungsanordnung mit dem vorangehend erläuterten Aufbau bzw. der vorangehend erläuterten Funktionalität in das Getriebe auch zur Schmierung der Drehschwingungsdämpfungsanordnung, insbesondere der Kopplungsanordnung derselben, genutzt werden. Dies ist insofern von Bedeutung, als die in der Drehschwingungsdämpfungsanordnung, insbesondere auch der Kopplungsanordnung derselben, auftretenden Reibeffekte das Schwingungsverhalten und damit auch die bei Übergang in den überkritischen Zustand auftretende Phasenverschiebung nachteilhaft beeinflussen können. Durch Ausnutzung der Schmierwirkung des Schmierfluids werden derartige Reibungseffekte und auch Verschleißeffekte gemindert. Ferner unterliegt die Drehschwingungsdämpfungsanordnung bei Integration in das Getriebe weniger den durch Achsversatz bzw. Achsneigung unvermeidbaren Taumelbewegungen in einem Antriebsstrang, welche gleichermaßen zu hohen Belastungen insbesondere auch im Bereich der Kopplungsanordnung führen können und selbstverständlich auch die Phasenverschiebungscharakteristik nachteilhaft beeinträchtigen können.

Beispielsweise kann bei dem erfindungsgemäßen Getriebe vorgesehen sein, dass die Phasenschieberanordnung ein Schwingungssystem mit einer Primärseite und einer gegen die Wirkung einer Federanordnung bezüglich der Primärseite um die Drehachse drehbaren Sekundärseite umfasst.

Auch bei dem erfindungsgemäßen Aufbau ist aufgrund der hohen mechanischen Stabilität die Kopplungsanordnung vorzugsweise als Planetengetriebeanordnung ausgebildet und kann einen an den zweiten Drehmomentübertragungsweg angebundenen Planetenradträger mit einer Mehrzahl von daran drehbar getragenen Planetenrädern umfassen.

Zur Drehmomenteinleitung bzw. Ausleitung aus dem ersten Drehmomentübertragungsweg bzw. zur Drehmomentenabgabe in den Ausgangsbereich kann vorgesehen sein, dass die Planetengetriebeanordnung eine an den ersten Drehmomentübertragungsweg angebundene erste Koppelradanordnung in Kämmeingriff mit den Planetenrädern und eine an den Ausgangsbereich angebundene zweite Koppelradanordnung in Kämmeingriff mit den Planetenrädern umfasst. Dabei können die beiden Koppelradanordnungen entweder als Hohlradanordnung ausgebildet sein, so dass vor allem der radial außerhalb der Planetenräder liegende Bauraum effizient genutzt wird, oder können als Sonnenradanordnung ausgebildet sein, so dass vor allem der radial innen liegende Bauraum effizient genutzt wird.

Zur Einstellung des Schwingungsverhaltens des im ersten Drehmomentübertragungsweg vorgesehenen Schwingungssystems kann vorgesehen sein, dass dieses wenigstens zwei zueinander seriell angeordnete Schwingungsdämpfer jeweils mit einer Primärseite und einer bezüglich dieser drehbaren Sekundärseite umfasst. Alternativ oder zusätzlich kann vorgesehen sein, dass das Schwingungssystem wenigstens zwei zueinander parallel wirksame Schwingungsdämpfer jeweils mit einer Primärseite und einer bezüglich dieser drehbaren Sekundärseite umfasst.

Für die Integration der Drehschwingungsdämpfungsanordnung in das Getriebe kann vorgesehen sein, dass im Drehmomentübertragungsweg zwischen wenigstens einem Getriebeeingangsorgan und dem Übersetzungsänderungssystem eine Drehschwingungsdämfpungsanordnung angeordnet ist. Alternativ oder zusätzlich kann vorgesehen sein, dass im Drehmomentübertragungsweg zwischen dem Übersetzungsänderungssystem und wenigstens einem Getriebeausgangsorgan eine Drehschwingungsdämfpungsanordnung angeordnet ist. Dies hat zur Folge, dass das Übersetzungsänderungssystem an sich bezüglich eines herkömmlichen Aufbaus unverändert bleiben kann und im Drehmomentenfluss davor oder/und danach die Schwingungsdämpfungsfunktionalität durch Leistungsverzweigung und Schwingungsüberlagerung erhalten wird.

Die durch ein Schmierfluid in einem Getriebe vorhandene Schmierfunktionalität kann in baulich einfacher Weise dadurch genutzt werden, dass das Übersetzungsänderungssystem in einem abgeschlossenen Volumenbereich eines Getriebegehäuses aufgenommen ist und dass wenigstens ein Teil der, vorzugsweise die gesamte Drehschwingungsdämfpungsanordnung in dem Volumenbereich angeordnet ist. Dabei kann der in dem Volumenbereich aufgenommene Teil beispielsweise die Kopplungsanordnung umfassen.

Weiter kann vorgesehen sein, dass ein Teil der Drehschwingungsdämfpungsanordnung außerhalb des Volumenbereichs angeordnet ist, wobei der außerhalb des Volumenbereichs vorgesehene Teil die Phasenschieberanordnung umfassen kann, während beispielsweise die Kopplungsanordnung in dem Volumenbereich angeordnet sein kann. Dies hat den Vorteil, dass diese Baugruppe Phasenschieberanordnung für deren Funktionalität die Schmierwirkung von weniger großer Bedeutung ist, als bei der Kopplungsanordnung, aufgrund ihrer Positionierung außerhalb des Volumenbereichs Bauraum in dem Volumenbereich freigibt bzw. der Volumenbereich an sich kleiner gestaltet werden kann.

Bei einer hinsichtlich der Funktionenverschmelzung besonders vorteilhaften Ausgestaltungsvariante kann vorgesehen sein, dass die Kopplungsanordnung einen Teil des Übersetzungsänderungssystems bildet. Es wird somit möglich, das Übersetzungsänderungsspektrum des Übersetzungsänderungssystems zu vergrößern bzw. die verbleibenden Bereiche des Übersetzungsänderungssystems entsprechend geändert auszuführen, so dass eine sehr kompakte Baugröße erreichbar ist.

Bei einer insbesondere hinsichtlich der Einbindung in einen Antriebsstrang vorteilhaften Ausgestaltung kann vorgesehen sein, dass wenigstens ein Getriebeeingangsorgan eine an einem Getriebegehäuse drehbar getragene Getriebeeingangswelle ist oder/und dass wenigstens ein Getriebeausgangsorgan eine an dem Getriebegehäuse drehbar getragene Getriebeausgangswelle ist.

Weiter werden die Effekte der vorliegenden Erfindung besonders effizient erhalten, wenn das Getriebe ein automatisch schaltendes Getriebe, vorzugsweise Automatikgetriebe oder automatisiertes Getriebe, ist.

Es sei in diesem Zusammenhang darauf hingewiesen, dass die Prinzipien der vorliegenden Erfindung in Zusammenhang mit verschiedenst gestalteten automatisch bzw. automatisiert arbeitenden Getrieben zum Einsatz kommen können. So kann das Getriebe ein herkömmlich aufgebautes Automatikgetriebe mit einer Mehrzahl von Planetengetriebestufen sein, wie vorangehend bereits mit Bezug auf die Fig. 1 erläutert. Auch automatisiert schaltende Schaltgetriebe, beispielsweise auch Doppelkupplungsgetriebe mit zwei Getriebeeingangswellen, können im Kontext der vorliegenden Erfindung genutzt werden. Dabei ist es selbstverständlich möglich, in Zuordnung zu nur einer bzw. beiden Getriebeeingangswellen eine Drehschwingungsdämpfungsanordnung mit Leistungsverzweigung vorzusehen. Auch ist es möglich, dass bei Getrieben, welche mehrere Ausgangswellen aufweisen, beispielsweise für den Einsatz in Allradfahrzeugen, in Zuordnung zu einer bzw. beiden Ausgangswellen jeweils eine derartige Drehschwingungsdämpfungsanordnung vorzusehen.

Die vorliegende Erfindung wird nachfolgend mit Bezug auf die beiliegenden Figuren detailliert beschrieben. Es zeigt:
- Fig. 1: einen Teilbereich eines Antriebsstrangs mit hydrodynamischem Drehmomentwandler und Automatikgetriebe und in den Drehmomentwandler integrierter Drehschwingungsdämpfungsanordnung mit Leistungsverzweigung;
- Fig. 2: eine der Fig. 1 entsprechende Darstellung mit in das Getriebe integrierter Drehschwingungsdämpfungsanordnung;
- Fig. 3: eine der Fig. 2 entsprechende Darstellung einer alternativen Ausgestaltungsart;
- Fig. 4: eine der Fig. 2 entsprechende Darstellung einer alternativen Ausgestaltungsart;
- Fig. 5: eine der Fig. 2 entsprechende Darstellung einer alternativen Ausgestaltungsart;
- Fig. 6: eine Teil-Längsschnittdarstellung eines Getriebes mit einem hydrodynamischen Drehmomentwandler und in das Getriebe integrierter Drehschwingungsdämpfungsanordnung;
- Fig. 7: eine der Fig. 6 entsprechende Darstellung einer alternativen Ausgestaltungsart ohne hydrodynamischen Drehmomentwandler.

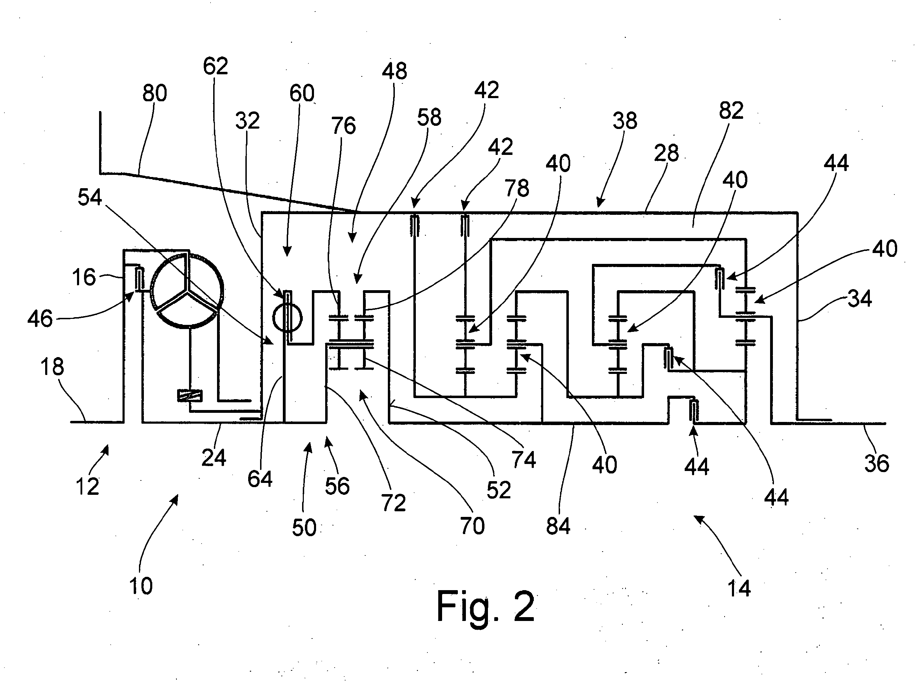

Bei dem in Fig. 2 dargestellten Teilbereich eines Antriebsstrangs 10 mit einem hydrodynamischen Drehmomentwandler 12 und einem Getriebe 14, insbesondere Automatikgetriebe entspricht der grundsätzliche Aufbau dieses Getriebes 14 mit den Planetengetriebestufen 40, den Bremsen 42 und den Kupplungen 44 dem mit Bezug auf die Fig. 1 beschriebenen Aufbau, so dass auf die diesbezüglichen Ausführungen verwiesen werden kann. Auch der Drehmomentwandler 12 entspricht hinsichtlich seines grundsätzlichen Aufbaus dem vorangehend beschriebenen Aufbau.

Man erkennt in Fig. 2, dass die Drehschwingungsdämpfungsanordnung 48 mit ihrer Phasenschieberanordnung 60 und ihrer Kopplungsanordnung 58 in den vom Getriebegehäuse 28 umschlossenen Volumenbereich 82, in welchem auch das Übersetzungsänderungssystem 38 enthalten ist, integriert ist. Die am Gehäuse 28 drehbar getragene Getriebeeingangswelle 24 stellt im Wesentlichen den Eingangsbereich 50 der Drehschwingungsdämpfungsanordnung 48 bereit. Die beiden Drehmomentübertragungswege 54 und 56 gehen von der Getriebeeingangswelle 24 aus. So ist beispielsweise die Primärseite 64 des Schwingungssystems 62 an die Getriebeeingangswelle 24 angebunden, ebenso wie der Planetenradträger 72 des zweiten Drehmomentübertragungswegs 56. Das abtriebsseitige Hohlrad 78 bzw. der Ausgangsbereich 52 der Drehschwingungsdämpfungsanordnung 48 ist an eine Eingangswelle 84 des Übersetzungsänderungssystems 38 angebunden.

Bei dem in Fig. 2 gezeigten Aufbau liegt die Drehschwingungsdämpfungsanordnung 58, die hier vollständig in dem vom Getriebegehäuse 28 umschlossenen Volumenbereich 82 aufgenommen ist, im Drehmomentenfluss zwischen der Getriebeeingangswelle 24 und dem Übersetzungsänderungssystems 38, so dass die insbesondere im Einrückzustand der Überbrückungskupplung 46 des Drehmomentwandlers 12 in den Eingangsbereich 50, also die Getriebeeingangswelle 24, eingeleiteten Drehungleichförmigkeiten bzw. Drehschwingungen vor der Weiterleitung des Drehmoments in das Übersetzungsänderungssystems 38 eliminiert bzw. zumindest teilweise gemindert werden können und in dem dann folgenden Teil des Antriebsstrangs bzw. Getriebes 24 ein von Ungleichförmigkeiten im Wesentlichen befreites Drehmoment zu übertragen ist.

Durch die Integration der Drehschwingungsdämpfungsanordnung 48 in den Volumenbereich 82 kann insbesondere der Schmiereffekt des in diesem Volumenbereich 82 auch enthaltenden Schmierfluids in den verschiedenen Systembereichen der Drehschwingungsdämpfungsanordnung 58 vorteilhaft genutzt werden. Ferner wird diese von Taumelanregungen der Antriebswelle 18 im Wesentlichen frei gehalten. Weiter erkennt man in Fig. 2, dass der Drehmomentwandler 12 mit deutlich geringerer Baugröße ausgestaltet und in einer entsprechend auch kleiner dimensionierten Getriebeglocke 80 untergebracht werden kann.

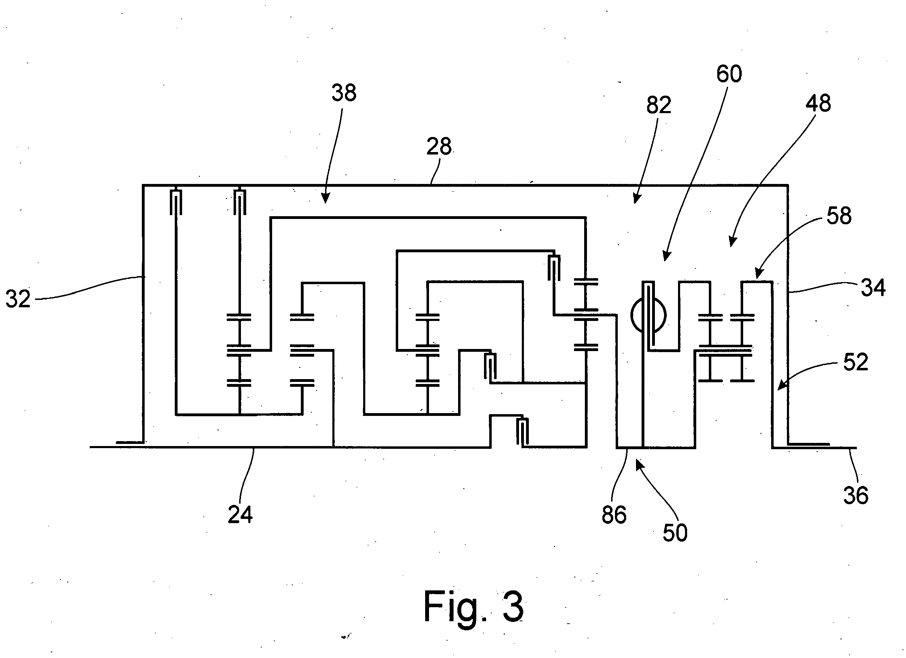

Nachfolgend werden mit Bezug auf die Fig. 3 bis 5 verschiedene Variationen des Getriebes 14 mit darin integrierter Drehschwingungsdämpfungsanordnung 48 beschrieben. Auch hier sei darauf hingewiesen, dass der grundsätzliche Aufbau sowohl des Getriebes 14, als auch der Drehschwingungsdämpfungsanordnung 48 den vorangehend Beschriebenen entsprechen und insoweit auf die diesbezüglichen Ausführungen zu verweisen ist.

Bei der in Fig. 3 dargestellten Ausgestaltungsform ist die Drehschwingungsdämpfungsanordnung 48 im Drehmomentenfluss zwischen dem Übersetzungsänderungssystem 38 und der Getriebeausgangswelle 36 angeordnet. Die Getriebeeingangswelle 24 bildet hier auch die Eingangswelle für das Übersetzungsänderungssystem 38, wie bei dem in Fig. 1 dargestellten Getriebe 14. Eine Ausgangswelle 86 des Übersetzungsänderungssystems 38 bildet den Eingangsbereich 50 der Drehschwingungsdämpfungsanordnung 48 bzw. ist damit gekoppelt. Der Ausgangsbereich 52 der Drehschwingungsdämpfungsanordnung 58 ist an die Getriebeausgangswelle 36 angebunden.

Bei dieser Ausgestaltungsform kann aufgrund ihrer Positionierung die Drehschwingungsdämpfungsanordnung 48 nicht die in einer Brennkraftmaschine über einen Drehmomentwandler oder dergleichen in die Getriebeeingangswelle 24 eingeleiteten Drehungleichförmigkeiten bzw. Schwingungen vor Einleitung in das Übersetzungsänderungssystem dämpfen. Der Vorteil dieser Ausgestaltung liegt darin, dass im verbleibenden Teil des Antriebsstrangs eine entsprechend intensivere Schwingungsdämpfung erfolgen kann, insbesondere auch mit einbeziehend Schwingungsanregungen, die im Übersetzungsänderungssystem 38 entstehen. Die vorangehend bereits erläuterten Vorteile hinsichtlich Reibungsoptimierung und Taumelentkopplung werden hier gleichermaßen erreicht.

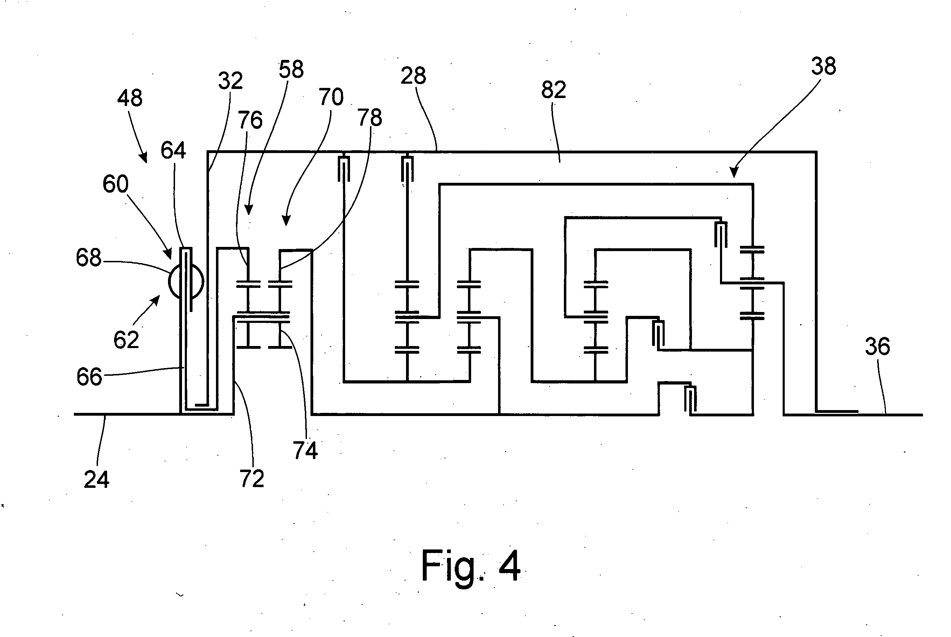

Die Fig. 4 zeigt eine Ausgestaltung, bei welcher nur ein Teil der Drehschwingungsdämpfungsanordnung 48 in den vom Getriebegehäuse 28 umschlossenen Volumenbereich 82 integriert ist. Im dargestellten Beispiel ist dies insbesondere die Kopplungsanordnung 58 mit ihrer Planetengetriebeanordnung 70. Die Phasenschieberanordnung 60 bzw. das Schwingungssystem 62 derselben liegt außerhalb des Volumenbereichs 82, beispielsweise in dem von der in Fig. 4 nicht dargestellten Getriebeglocke umschlossenen Volumen. Die Primärseite 64 derselben ist an die Getriebeeingangswelle 24 im Bereich außerhalb des Getriebegehäuses 28 angebunden. Die Sekundärseite 66 durchgreift die Gehäusewandung 32 und ist dann innerhalb des Gehäuses 28 mit dem antriebsseitigen Hohlrad 76 gekoppelt. Dieses antriebsseitige Hohlrad 76, das abtriebsseitige Hohlrad 78 und der Planetenradträger 72 mit den daran getragenen Planetenrädern 74 liegen im Volumenbereich 82 und können somit das in diesem Volumenbereich enthaltene Schmierfluid zur Reibungsminderung nutzen.

Um bei dieser Ausgestaltungsform auch im Bereich der Phasenschieberanordnung 60 eine Reibungsminderung durch Einsatz eines Schmierfluids zu erlangen, kann diese nach Art eines Torsionsdämpfers aufgebaut sein, welcher ein die Dämpferfedern 68, enthaltendes, gekapseltes und mit einem Schmiermedium gefülltes Volumen aufweist. Alternativ kann das Schwingungssystem 62 nach Art eines offenen, trocken laufenden Torsionsdämpfers ausgebildet sein.

Es ist weiter darauf hinzuweisen, dass auch bei der in Fig. 3 gezeigten Ausgestaltungsform ein Teil der Schwingungsdämpfungsanordnung 48 im Volumenbereich 82 angeordnet sein könnte. Beispielsweise könnte die Phasenschieberanordnung 60 im Volumenbereich 82 liegend vorgesehen sein, während die Kopplungsanordnung 48 dann außerhalb des Volumenbereichs 82 liegend positioniert wäre.

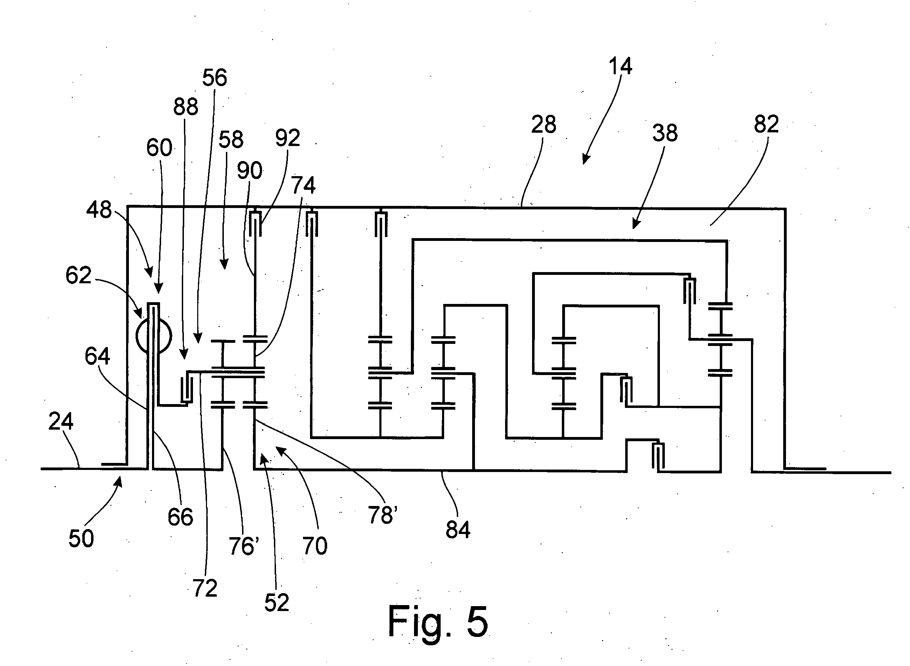

In Fig. 5 ist eine Ausgestaltungsvariante gezeigt, bei welcher die Kopplungsanordnung 58 bzw. die Planetengetriebeanordnung 70 derselben einen funktionalen Bestandteil des Übersetzungsänderungssystems 38 bereitstellt. Hier ist zunächst darauf hinzuweisen, dass die gesamte Drehschwingungsdämpfungsanordnung 48 im Volumenbereich 82 angeordnet ist. Selbstverständlich könnte hier der Aufbau auch so wie in Fig. 4 dargestellt sein.

Ein konstruktiver Unterschied in der Ausgestaltung der Kopplungsanordnung 58 liegt darin, dass anstelle der vorangehend erläuterten Hohlräder nunmehr ein antriebsseitiges Sonnenrad 76' und ein abtriebsseitiges Sonnennrad 78' radial innerhalb der am Planetenradträger 72 getragenen Planetenräder 74 vorgesehen sind. Auch damit lässt sich die vorangehend erläuterte Funktionalität zum Zusammenführen der über die beiden Drehmomentübertragungswege geleiteten Drehmomentenanteile erreichen, wobei hier der radial innerhalb der Planetenräder 74 liegende Bauraum genutzt wird. Auch diese konstruktive Variation ist bei den vorangehend erläuterten Ausgestaltungsformen grundsätzlich realisierbar.

Man erkennt weiter, dass der Planetenradträger 72 durch eine Kupplung 88 an die Primärseite 64 des Schwingungssystems 62 und über diese an die Getriebeeingangswelle 24 und mithin den Eingangsbereich 50 angekoppelt ist. Die Sekundärseite 66 des Schwingungssystems 62 ist mit dem antriebsseitigen Sonnenrad 76' gekoppelt. Das abtriebsseitige Sonnenrad 78 stellt im Wesentlichen den Ausgangsbereich 52 bereit und ist an die Eingangswelle 84 des Übersetzungsänderungssystems 38 angekoppelt. Weiter ist ein die Planetenräder 74 umgebendes Hohlrad 90 vorgesehen, das über eine Bremse 92 wahlweise drehfest an das Gehäuse 28 angekoppelt oder zur Drehung freigegeben werden kann.

Bei eingerückter Kupplung 88 und nicht aktivierter Bremse 92, also frei drehbarem Hohlrad 90, arbeitet die Drehschwingungsdämpfungsanordnung so wie vorangehend erläutert.

Wird die Kupplung 88 ausgerückt, also der Planetenradträger 72 vom Eingangsbereich 50 entkoppelt und gleichzeitig durch Aktivierung der Bremse 92 das Hohlrad 90 am Gehäuse 28 drehfest gehalten, wird eine Übersetzung der Drehzahl der Getriebeeingangswelle bzw. der Sekundärseite 66 des Schwingungssystems 62 erreicht, so dass bei derartiger Beschaltung die Kopplungsanordnung 58 bzw. die Planetengetriebeanordnung 70 als Vorübersetzungsstufe wirksam ist. Dadurch lässt sich im Idealfall die im Getriebe 14 verfügbare Anzahl an Gängen verdoppeln.

In diesem Zustand, in welchem durch Ausrücken der Kupplung 88 die Drehschwingungsdämpfungsanordnung 48 nicht mehr mit Leistungsverzweigung arbeiten kann, da der den Planetenradträger 72 umfassende zweite Drehmomentübertragungsweg 56 unterbrochen ist, ist das Schwingungssystem 62 als herkömmlicher Torsionsschwingungsdämpfer wirksam, dessen Primärseite 64 an die antreibende Getriebeeingangswelle 24 angekoppelt ist und dessen Sekundärseite 66 über die Vorübersetzungsstufe, also die Planetengetriebeanordnung 70, an die Eingangswelle 84 des Übersetzungsänderungssystems angebunden ist.

Dieser Effekt kann gleichermaßen dazu genutzt werden, das Übersetzungsänderungssystem 38 mit einer geringeren Anzahl an Übersetzungsänderungsoptionen auszugestalten, dieses also grundsätzlich baulich kleiner zu gestalten, so dass durch die Integration der Drehschwingungsdämpfungsanordnung 48 in das Getriebe 14 und auch die Funktionenverschmelzung das Getriebe 14 grundsätzlich mit sehr kompakter Baugröße ausgestaltet werden kann. So kann ein beispielsweise grundsätzlich für das Bereitstellen von acht verschiedenen Gängen aufgebautes Übersetzungsänderungssystem 38 so umgestaltet werden, dass es lediglich noch für die Bereitstellung von vier Gängen ausgelegt ist, wobei dann die Drehschwingungsdämpfungsanordnung 48 durch das Bereitstellen einer Vorübersetzungsstufe wieder dazu führt, dass insgesamt acht verschiedene Gangstufen nutzbar sind.

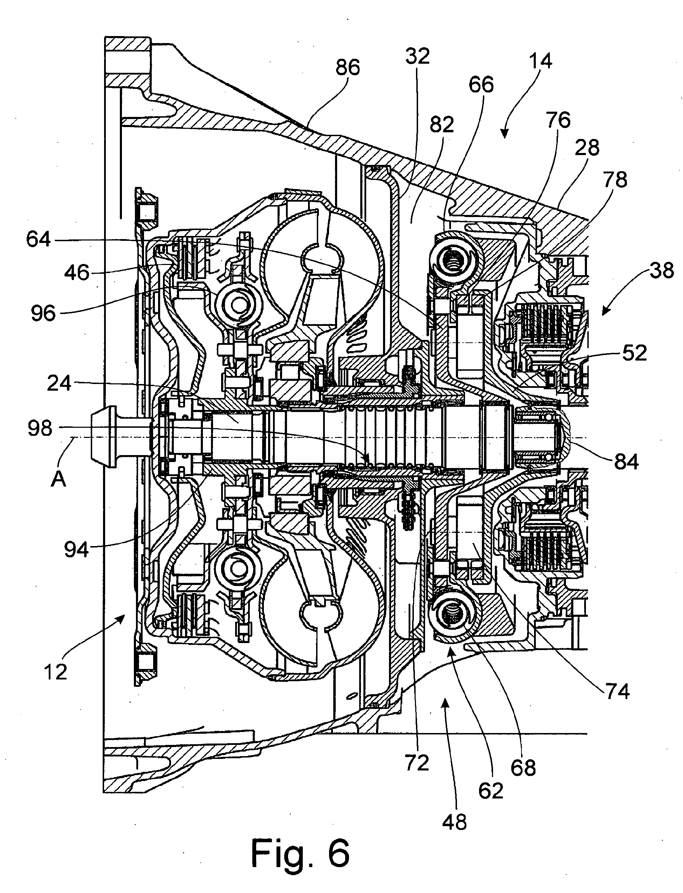

Die Fig. 6 zeigt in konstruktiver Ausführung ein Getriebe 14 mit einem hydrodynamischen Drehmomentwandler 12, der grundsätzlich von herkömmlichem Aufbau sein kann und beispielsweise in seinem Drehmomentübertragungsweg zwischen der Überbrückungskupplung 46 und der hier erkennbaren Abtriebsnabe 94 einen herkömmlichen Torsionsschwingungsdämpfer 96 umfassen kann. Der Drehmomentwandler 12 ist in dem von der Getriebeglocke 80 umschlossenen Volumen angeordnet. Die Getriebeeingangswelle 24 ist durch die Gehäusewandung 32 hindurchgeführt, wobei hier eine allgemein mit 98 bezeichnete Drehdurchführung vorgesehen sein kann, über welche das von einer Druckfluidpumpe geförderte Druckfluid auch in Richtung zu dem Drehmomentwandler 12 geleitet werden kann.

Die Eingangswelle 84 des Übersetzungsänderungssystems 38, von welchem hier nur beispielsweise lamellenkupplungsartig ausgebildete Bereiche dargestellt sind, ist über ein Lager, beispielsweise Wälzkörperlager, auf dem in dem Volumenbereich 82 liegenden Ende der Getriebeeingangswelle 24 gelagert.

In diesem Endbereich ist mit der Getriebeeingangswelle 24 die beispielsweise als Zentralscheibenelement ausgebildete Primärseite 64 des Schwingungssystems 62 verbunden. Dieses Zentralscheibenelement bildet gleichermaßen auch den Planetenradträger 72, an welchem die Planetenräder 74 in Umfangsrichtung aufeinander folgend drehbar getragen sind. Die Sekundärseite 66 umfasst zwei die Dämpferfedern 68 umgreifende Deckscheibenelemente, von welchen eines mit dem antriebsseitigen Hohlrad 76 fest verbunden oder ggf. auch integral ausgebildet ist.

Es sei hier darauf hingewiesen, dass die Verbindung der Primärseite 64 mit der Getriebeeingangswelle 24 beispielsweise durch Steckverzahnung, Verschraubung oder in sonstiger Weise erfolgen kann. In entsprechender Weise kann auch der Ausgangsbereich 52 der Drehschwingungsdämpfungsanordnung 48 mit der Eingangswelle 84 des Übersetzungsänderungssystems durch Steckverzahnung drehfest verbunden sein.

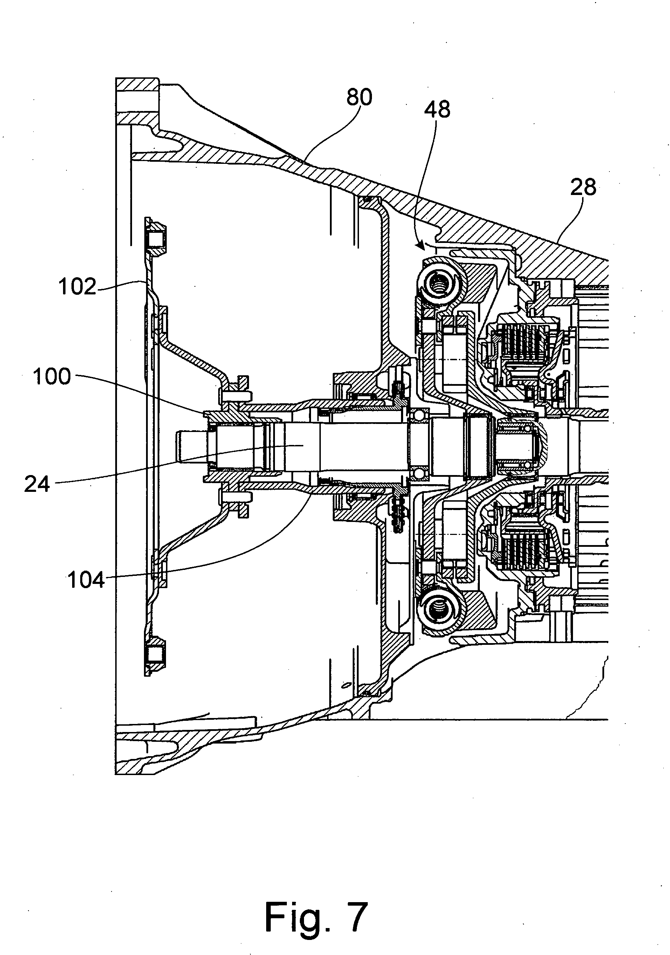

Eine Abwandlung dieses konstruktiven Aufbaus ist in Fig. 7 gezeigt. Man erkennt hier, dass dieser Aufbau hinsichtlich der Ausgestaltung und auch der Positionierung der Drehschwingungsdämpfungsanordnung 48 demjenigen der Fig. 6 entspricht. In der Kupplungsglocke 80 ist hier jedoch kein hydrodynamischer Drehmomentwandler angeordnet. Vielmehr ist die Getriebeeingangswelle 24 über eine Steckverzahnung mit einer Verbindungsnabe 100 zur gemeinsamen Drehung gekoppelt. An dieser Verbindungsnabe 100 ist eine scheibenartig ausgebildete Kopplungseinheit 102 festgelegt, welche beispielsweise über eine Flexplatte oder dergleichen an eine Antriebswelle, also beispielsweise eine Kurbelwelle, angebunden werden kann. Über eine mit dieser Kopplungseinheit 102 auch fest verbundene und die Getriebeeingangswelle 24 umgebende Pumpenantriebsnabe 104 kann eine im Getriebegehäuse 28 vorgesehene Fluidpumpe angetrieben werden. Da eine Versorgung beispielsweise eines hydrodynamischen Drehmomentwandlers mit Fluid nicht erforderlich ist, ist hier auch im Bereich der Getriebeeingangswelle 24 eine Drehdurchführung nicht vorgesehen.

Es sei darauf hingewiesen, dass im Rahmen der Prinzipien der vorliegenden Erfindung an den verschiedenen Ausgestaltungsvarianten selbstverständlich Änderungen möglich sind. So könnte beispielsweise als im Sinne der vorliegenden Erfindung zu betrachtendes Getriebeeingangsorgan anstelle einer Getriebeeingangswelle auch ein primärseitiges Bauteil des Schwingungssystems der Phasenschieberanordnung genutzt werden. Dieses könnte bei außerhalb des vom Getriebegehäuse umschlossenen Volumenbereichs positionierter Phasenschieberanordnung beispielsweise unmittelbar mit der in Fig. 7 erkennbaren Kopplungseinheit 102 verbunden sein oder ggf. diese sogar zum Teil bereitstellen. In diesem Sinne wäre dann beispielsweise diese Kopplungseinheit bzw. die Primärseite oder ein primärseitiges Bauteil einerseits als Getriebeeingangsorgan zu interpretieren, andererseits auch zumindest als Teilbereich des Eingangsbereichs der Drehschwingungsdämpfungsanordnung.

## Patentansprüche

1. Getriebe, insbesondere für den Antriebsstrang eines Fahrzeugs, umfassend wenigstens ein Getriebeeingangsorgan (24), wenigstens ein Getriebeausgangsorgan (36) und im Drehmomentübertragungsweg zwischen dem wenigstens einen Getriebeeingangsorgan (24) und dem wenigstens einen Getriebeausgangsorgan (36) ein Übersetzungsänderungssystem (38), ferner umfassend im Drehmomentübertragungsweg zwischen wenigstens einem Getriebeeingangsorgan (24) und wenigstens einem Getriebeausgangsorgan (36) eine Drehschwingungsdämpfungsanordnung (48) mit einem Eingangsbereich (50) und einem Ausgangsbereich (52), wobei zwischen dem Eingangsbereich (50) und dem Ausgangsbereich (52) ein erster Drehmomentübertragungsweg (54) und parallel dazu ein zweiter Drehmomentübertragungsweg (56) sowie eine Kopplungsanordnung (58) zur Überlagerung der über die Drehmomentübertragungswege (54, 56) geleiteten Drehmomente vorgesehen sind, wobei die Drehschwingungsdämpfungsanordnung (48) wenigstens im ersten Drehmomentübertragungsweg (54) eine Phasenschieberanordnung (60) umfasst zur Erzeugung einer Phasenverschiebung von über den ersten Drehmomentübertragungsweg (54) geleiteten Drehungleichförmigkeiten bezüglich über den zweiten Drehmomentübertragungsweg (56) geleiteten Drehungleichförmigkeiten,
wobei die Kopplungsanordnung (58) eine Planetengetriebeanordnung (70) umfasst,
wobei die Planetengetriebeanordnung (70) einen an den zweiten Drehmomentübertragungsweg (56) angebundenen Planetenradträger (72) mit einer Mehrzahl von daran drehbar getragenen Planetenrädern (74) umfasst,
**dadurch gekennzeichnet, daß** die Planetengetriebeanordnung (70) eine an den ersten Drehmomentübertragungsweg (54) angebundene erste Koppelradanordnung (76; 76') in Kämmeingriff mit den Planetenrädern (74) und eine an den Ausgangsbereich (52) angebundene zweite Koppelradanordnung (78; 78') in Kämmeingriff mit den Planetenrädern (74) umfasst,
wobei die Planetengetriebeanordnung (70) eine an den ersten Drehmomentübertragungsweg (54) angebundene erste Koppelradanordnung (76; 76') in Kämmeingriff mit den Planetenrädern (74) und eine an den Ausgangsbereich (52) angebundene zweite Koppelradanordnung (78; 78') in Kämmeingriff mit den Planetenrädern (74) umfasst, und
wobei die erste Koppelradanordnung (76) und die zweite Koppelradanordnung (78) jeweils eine Hohlradanordnung (76, 78) umfassen.

2. Getriebe nach Anspruch 1, **dadurch gekennzeichnet, dass** die Phasenschieberanordnung (60) ein Schwingungssystem (62) mit einer Primärseite (64) und einer gegen die Wirkung einer Federanordnung (68) bezüglich der Primärseite (64) um eine Drehachse (A) drehbaren Sekundärseite (66) umfasst.

3. Getriebe nach einem der vorhergehenden Ansprüche, **dadurch gekennzeichnet, dass** die erste Koppelradanordnung (76') und die zweite Koppelradanordnung (78') jeweils eine Sonnenradanordnung (76', 78') umfasst.

4. Getriebe nach einem der vorhergehenden Ansprüche, **dadurch gekennzeichnet, dass** das Schwingungssystem (62) wenigstens zwei zueinander seriell angeordnete Schwingungsdämpfer jeweils mit einer Primärseite und einer bezüglich dieser drehbaren Sekundärseite umfasst.

5. Getriebe nach einem der vorhergehenden Ansprüche, **dadurch gekennzeichnet, dass** das Schwingungssystem (62) wenigstens zwei zueinander parallel wirksame Schwingungsdämpfer jeweils mit einer Primärseite und einer bezüglich dieser drehbaren Sekundärseite umfasst.

6. Getriebe nach einem der vorhergehenden Ansprüche, **dadurch gekennzeichnet, dass** im Drehmomentübertragungsweg zwischen wenigstens einem Getriebeeingangsorgan (24) und dem Übersetzungsänderungssystem (38) eine Drehschwingungsdämfpungsanordnung (48) angeordnet ist.

7. Getriebe nach einem der vorhergehenden Ansprüche, **dadurch gekennzeichnet, dass** im Drehmomentübertragungsweg zwischen dem Übersetzungsänderungssystem (38) und wenigstens einem Getriebeausgangsorgan (36) eine Drehschwingungsdämfpungsanordnung (48) angeordnet ist.

8. Getriebe nach einem der vorhergehenden Ansprüche, **dadurch gekennzeichnet, dass** das Übersetzungsänderungssystem (38) in einem abgeschlossenen Volumenbereich (82) eines Getriebegehäuses (28) aufgenommen ist und dass wenigstens ein Teil der, vorzugsweise die gesamte, Drehschwingungsdämfpungsanordnung (48) in dem Volumenbereich (82) angeordnet ist.

9. Getriebe nach Anspruch 8, **dadurch gekennzeichnet, dass** ein Teil der Drehschwingungsdämfpungsanordnung (48) außerhalb des Volumenbereichs (82) angeordnet ist.

10. Getriebe nach Anspruch 9, **dadurch gekennzeichnet, dass** wenigstens ein Teil der Phasenschieberanordnung (60) außerhalb des Volumenbereichs (82) angeordnet ist oder/und dass die Kopplungsanordnung (58) in dem Volumenbereich (82) angeordnet ist.

11. Getriebe nach einem der vorhergehenden Ansprüche, **dadurch gekennzeichnet, dass** die Kopplungsanordnung (58) einen Teil des Übersetzungsänderungssystems (38) bildet.

12. Getriebe nach Anspruch 11, **dadurch gekennzeichnet, dass** der Drehmomentenfluss im zweiten Drehmomentübertragungsweg (56) unterbrechbar ist.

13. Getriebe nach einem der vorhergehenden Ansprüche, **dadurch gekennzeichnet, dass** wenigstens ein Getriebeeingangsorgan (24) eine an einem Getriebegehäuse (28) drehbar getragene Getriebeeingangswelle (24) ist oder/und dass wenigstens ein Getriebeausgangsorgan (36) eine an dem Getriebegehäuse (28) drehbar getragene Getriebeausgangswelle (36) ist.

14. Getriebe nach einem der vorhergehenden Ansprüche, **dadurch gekennzeichnet, dass** das Getriebe (14) ein automatisch schaltendes Getriebe, vorzugsweise Automatikgetriebe oder automatisiertes Getriebe, ist.

## Claims

1. Gearbox, in particular for the drive train of a vehicle, comprising at least one gearbox input member (24), at least one gearbox output member (36) and a transmission ratio change system (38) in the torque transmission path between the at least one gearbox input member (24) and the at least one gearbox output member (36), comprising, furthermore, a torsional vibration damping arrangement (48) with an input region (50) and an output region (52) in the torque transmission path between at least one gearbox input member (24) and at least one gearbox output member (36), a first torque transmission path (54) and, parallel thereto, a second torque transmission path (56) and a coupling arrangement (58) for superimposing the torques which are conducted via the torque transmission paths (54, 56) being provided between the input region (50) and the output region (52), the torsional vibration damping arrangement (48) comprising, at least in the first torque transmission path (54), a phase shift arrangement (60) for generating a phase shift of rotational irregularities which are conducted via the first torque transmission path (54) with respect to rotational irregularities which are conducted via the second torque transmission path (56),
the coupling arrangement (58) comprising a planetary gear arrangement (70),
the planetary gear arrangement (70) comprising a planetary gear carrier (72) which is attached to the second torque transmission path (56) and has a plurality of planetary gears (74) which are carried rotatably thereon,
**characterized in that** the planetary gear arrangement (70) comprises a first coupler gear arrangement (76; 76') which is attached to the first torque transmission path (54) in meshing engagement with the planetary gears (74), and a second coupler gear arrangement (78; 78') which is attached to the output region (52) in meshing engagement with the planetary gears (74),
the planetary gear arrangement (70) comprising a first coupler gear arrangement (76; 76') which is attached to the first torque transmission path (54) in meshing engagement with the planetary gears (74), and a second coupler gear arrangement (78; 78') which is attached to the output region (52) in meshing engagement with the planetary gears (74), and
the first coupler gear arrangement (76) and the second coupler gear arrangement (78) comprising in each case one internal gear arrangement (76, 78).

2. Gearbox according to Claim 1, **characterized in that** the phase shift arrangement (60) comprises a vibration system (62) with a primary side (64) and a secondary side (66) which can be rotated about a rotational axis (A) with regard to the primary side (64) counter to the action of a spring arrangement (68).

3. Gearbox according to either of the preceding claims, **characterized in that** the first coupler gear arrangement (76') and the second coupler gear arrangement (78') comprise in each case one sun gear arrangement (76', 78').

4. Gearbox according to one of the preceding claims, **characterized in that** the vibration system (62) comprises at least two vibration dampers which are arranged in series with respect to one another and in each case have a primary side and a secondary side which can be rotated with regard to the former.

5. Gearbox according to one of the preceding claims, **characterized in that** the vibration system (62) comprises at least two vibration dampers which act in parallel with respect to one another and in each case have a primary side and a secondary side which can be rotated with regard to the former.

6. Gearbox according to one of the preceding claims, **characterized in that** a torsional vibration damping arrangement (48) is arranged in the torque transmission path between at least one gearbox input member (24) and the transmission ratio change system (38).

7. Gearbox according to one of the preceding claims, **characterized in that** a torsional vibration damping arrangement (48) is arranged in the torque transmission path between the transmission ratio change system (38) and at least one gearbox output member (36).

8. Gearbox according to one of the preceding claims, **characterized in that** the transmission ratio change system (38) is received in a closed volume region (82) of a gearbox housing (28), and **in that** at least part of, preferably the entire, torsional vibration damping arrangement (48) is arranged in the volume region (82).

9. Gearbox according to Claim 8, **characterized in that** part of the torsional vibration damping arrangement (48) is arranged outside the volume region (82) .

10. Gearbox according to Claim 9, **characterized in that** at least part of the phase shift arrangement (60) is arranged outside the volume region (82), and/or **in that** the coupling arrangement (58) is arranged in the volume region (82).

11. Gearbox according to one of the preceding claims, **characterized in that** the coupling arrangement (58) forms part of the transmission ratio change system (38).

12. Gearbox according to Claim 11, **characterized in that** the torque flow in the second torque transmission path (56) can be interrupted.

13. Gearbox according to one of the preceding claims, **characterized in that** at least one gearbox input member (24) is a gearbox input shaft (24) which is supported rotatably on a gearbox housing (28), and/or **in that** at least one gearbox output member (36) is a gearbox output shaft (36) which is supported rotatably on the gearbox housing (28).

14. Gearbox according to one of the preceding claims, **characterized in that** the gearbox (14) is an automatically shifting gearbox, preferably an automatic gearbox or an automated gearbox.

## Revendications

1. Boîte de vitesses, en particulier pour la chaîne cinématique d'un véhicule, comprenant au moins un organe d'entrée de boîte de vitesses (24), au moins un organe de sortie de boîte de vitesses (36) et un système de changement de démultiplication (38) dans le chemin de transmission de couple entre ledit au moins un organe d'entrée de boîte de vitesses (24) et ledit au moins un organe de sortie de boîte de vitesses (36), comprenant en outre un agencement d'amortissement des vibrations de rotation (48) dans le chemin de transmission de couple entre au moins un organe d'entrée de boîte de vitesses (24) et au moins un organe de sortie de boîte de vitesses (36), avec une zone d'entrée (50) et une zone de sortie (52), dans lequel il est prévu, entre la zone d'entrée (50) et la zone de sortie (52), un premier chemin de transmission de couple (54) et parallèlement à celui-ci un deuxième chemin de transmission de couple (56) ainsi qu'un agencement d'embrayage (58) pour la superposition des couples menés par les chemins de transmission de couple (54, 56), dans lequel l'agencement d'amortissement des vibrations de rotation (48) comprend au moins un agencement de déphaseur (60) dans le premier chemin de transmission de couple (54) pour la production d'un déphasage d'irrégularités de rotation menées par le premier chemin de transmission de couple (54) par rapport à des irrégularités de rotation menées par le deuxième chemin de transmission de couple (56),
dans lequel l'agencement d'embrayage (58) comprend un agencement de train épicycloïdal (70),
dans lequel l'agencement de train épicycloïdal (70) comprend un porte-satellites (72) relié au deuxième chemin de transmission de couple (56), avec une multiplicité de satellites (74) portés de façon rotative sur celui-ci,
**caractérisée en ce que** l'agencement de train épicycloïdal (70) comprend un premier agencement de roue d'embrayage (76; 76') relié au premier chemin de transmission de couple (54) en prise avec les satellites (74) et un deuxième agencement de roue d'embrayage (78; 78') relié à la zone de sortie (52) en prise avec les satellites (74),
dans lequel l'agencement de train épicycloïdal (70) comprend un premier agencement de roue d'embrayage (76; 76') relié au premier chemin de transmission de couple (54) en prise avec les satellites (74) et un deuxième agencement de roue d'embrayage (78; 78') relié à la zone de sortie (52) en prise avec les satellites (74), et
dans lequel le premier agencement de roue d'embrayage (76) et le deuxième agencement de roue d'embrayage (78) comprennent chacun un agencement de couronne de train planétaire (76, 78).

2. Boîte de vitesses selon la revendication 1, **caractérisée en ce que** l'agencement de déphaseur (60) comprend un système de vibration (62) avec un côté primaire (64) et un côté secondaire (66) pouvant tourner autour d'un axe de rotation (A) par rapport au côté primaire (64) contre l'action d'un agencement de ressort (68).

3. Boîte de vitesses selon l'une quelconque des revendications précédentes, **caractérisée en ce que** le premier agencement de roue d'embrayage (76') et le deuxième agencement de roue d'embrayage (78') comprennent chacun un agencement de pignon planétaire (76', 78').

4. Boîte de vitesses selon l'une quelconque des revendications précédentes, **caractérisée en ce que** le système de vibration (62) comprend au moins deux amortisseurs de vibrations agencés en série l'un par rapport à l'autre avec respectivement un côté primaire et un côté secondaire pouvant tourner par rapport à celui-ci.

5. Boîte de vitesses selon l'une quelconque des revendications précédentes, **caractérisée en ce que** le système de vibration (62) comprend au moins deux amortisseurs de vibrations agissant parallèlement l'un à l'autre avec respectivement un côté primaire et un côté secondaire pouvant tourner par rapport à celui-ci.

6. Boîte de vitesses selon l'une quelconque des revendications précédentes, **caractérisée en ce qu'**un agencement d'amortissement des vibrations de rotation (48) est agencé dans le chemin de transmission de couple entre au moins un organe d'entrée de boîte de vitesses (24) et le système de changement de démultiplication (38).

7. Boîte de vitesses selon l'une quelconque des revendications précédentes, **caractérisée en ce qu'**un agencement d'amortissement des vibrations de rotation (48) est agencé dans le chemin de transmission de couple entre le système de changement de démultiplication (38) et au moins un organe de sortie de boîte de vitesses (36).

8. Boîte de vitesses selon l'une quelconque des revendications précédentes, **caractérisée en ce que** le système de changement de démultiplication (38) est logé dans une région de volume fermée (82) d'un boîtier de boîte de vitesses (28) et **en ce qu'**au moins une partie, de préférence la totalité, de l'agencement d'amortissement des vibrations de rotation (48) est logée dans la région de volume (82).

9. Boîte de vitesses selon la revendication 8, **caractérisée en ce qu'**une partie de l'agencement d'amortissement des vibrations de rotation (48) est agencée à l'extérieur de la région de volume (82).

10. Boîte de vitesses selon la revendication 9, **caractérisée en ce qu'**au moins une partie de l'agencement de déphaseur (60) est disposée à l'extérieur de la région de volume (82) et/ou **en ce que** l'agencement d'embrayage (58) est agencé dans la région de volume (82).

11. Boîte de vitesses selon l'une quelconque des revendications précédentes, **caractérisée en ce que** l'agencement d'embrayage (58) forme une partie du système de changement de démultiplication (38).

12. Boîte de vitesses selon la revendication 11, **caractérisée en ce que** le flux de couple peut être interrompu dans le deuxième chemin de transmission de couple (56).

13. Boîte de vitesses selon l'une quelconque des revendications précédentes, **caractérisée en ce qu'**au moins un organe d'entrée de boîte de vitesses (24) est un arbre d'entrée de boîte de vitesses (24) porté de façon rotative sur un boîtier de boîte de vitesses (28) et/ou **en ce qu'**au moins un organe de sortie de boîte de vitesses (36) est un arbre de sortie de boîte de vitesses (36) porté de façon rotative sur le boîtier de boîte de vitesses (28).

14. Boîte de vitesses selon l'une quelconque des revendications précédentes, **caractérisée en ce que** la boîte de vitesses (14) est une boîte de vitesses opérant automatiquement, de préférence une boîte de vitesses automatique ou une boîte de vitesses automatisée.
